# EUROPEAN PATENT APPLICATION

(11) **EP 3 118 095 A1**
(43) Date of publication of application: **18.01.2017**
(21) Application number: 15177358.7
(22) Date of filing: 17.07.2015
(51) Int. Cl.: B62K 19/02, B62K 21/12

(54) **TUBE STRUCTURE FOR BIKE**

(71) Applicant: Alex Global Technology, Inc., Tainan City (TW)
(72) Inventor: CHEN, Wei-Chin, Tainan City (TW)
(74) Representative: Jeannet, Olivier

(57) **Abstract**

A tube structure for a bike is revealed. It comprises a tube (1) having a closed wall (11) and an inner hollow space (12) defined by the closed wall (11). The inner hollow space (12) is filled with the foam material to form an inner foam layer (2).

## Description

### BACKGROUND OF THE INVENTION

### 1. Fields of the invention

The present invention relates to a tube structure for a bike, especially for a structure having the functions of shock absorption and non-deformation for further promotion of structural strength and a light weight thereof.

### 2. Descriptions of Related Art

In addition to being a vehicle, a bicycle has the functions of leisure and sport. The innovations of the bicycle focus on its appearance, comfort index, body strength, weight, speed and so on with the progress of the technology. Especially for cyclists of riding professional racing bicycles, what they pursue are improved comfort of riding, enhanced body strength, light weight and high speed.

In order to reduce the weight of the bicycle, a carbon fiber reinforced resin has been developed and used as a material of bicycle components to replace a traditional metal material. However, the carbon fiber reinforced resin still cannot meet the demand for weight reduction. Accordingly, some bicycle related industries further improve material of the bike structure. For instance, a Taiwan patent No. I483865 B, issued on 11st May. 2015, has disclosed a frame of fiber composite material; and a Taiwan patent No. M268199 U, issued on 21st Jun. 2005, has disclosed an improved bicycle wheel rim structure made by carbon fiber.

### SUMMARY OF THE INVENTION

In view of the above-mentioned problems, the object of the present invention is to provide a tube structure for a bike, especially for a structure having the functions of shock absorption and non-deformation for further promotion of structural strength and a light weight thereof by filling foam material in an inner hollow space of the tube of a bicycle frame.

Disclosed herein is a tube structure for a bike, comprising a tube having a closed wall and an inner hollow space defined by the closed wall, wherein the inner hollow space is filled with a foam material to form an inner foam layer.

According to an embodiment of the present invention, the tube is shaped into a bicycle handlebar before the inner hollow space is filled with the foam material to form the inner foam layer.

According to an embodiment of the present invention, the tube is shaped into at least one of an upper tube, a lower tube, a vertical tube, an upper fork tube, a lower fork tube and a handle tube head of a bicycle frame before the inner hollow space is filled with the foam material to form an inner foam layer.

According to an embodiment of the present invention, the tube is made of aluminum alloy, titanium alloy, magnesium alloy or carbon fiber.

According to an embodiment of the present invention, the foam material is selected from a group consisting of polystyrene, polypropylene, polyvinyl chloride, phenoplastics, and polyurethane.

### BRIEF DESCRIPTION OF THE DRAWINGS

FIG. 1 is a sectional view showing a tube structure for a bike according to the present invention;
FIG. 2 is a stereogram showing the tube structure for the bike used in a bicycle frame according to the present invention;
FIG. 3 is a stereogram showing the tube structure for the bike used in a bicycle handlebar according to the present invention;
FIG. 4 is a curve diagram showing a result of three point bending test of an aluminum tube and an aluminum tube filled with the foam material therein.

### DETAILED DESCRIPTION OF THE PREFERRED EMBODIMENT

Hereinafter, an exemplary embodiment of the present invention will be described in detail with reference to the accompanying drawings.

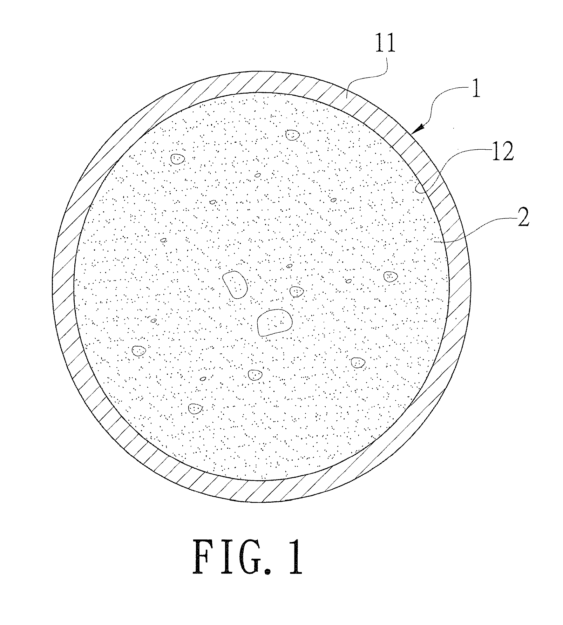

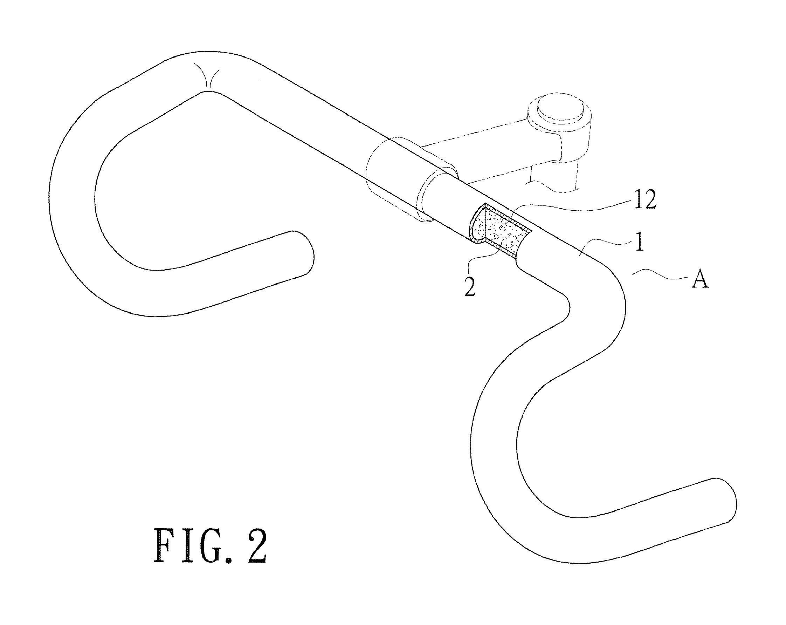

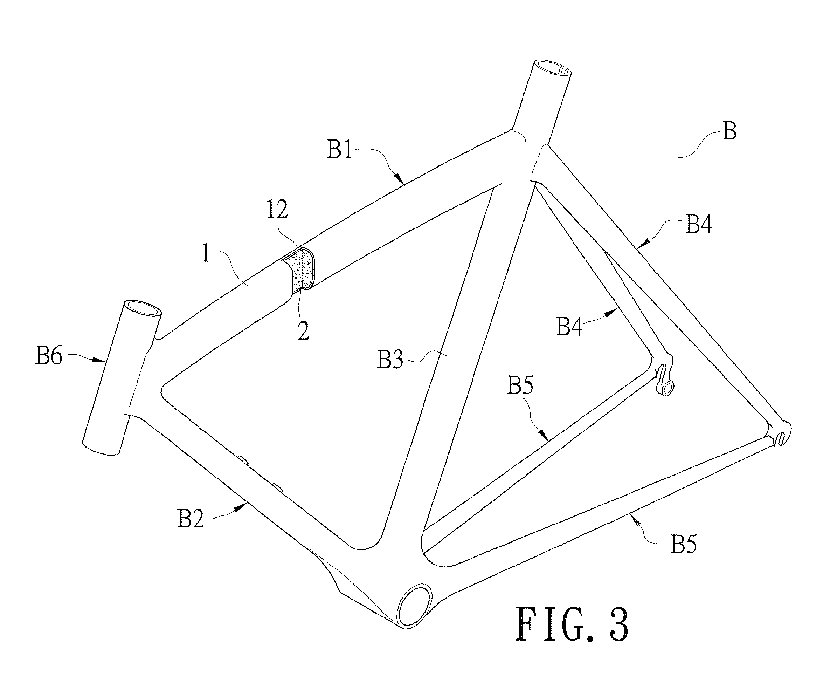

As shown in Fig. 1, Fig. 2 and Fig. 3, a tube structure for a bike is disclosed. It comprises a tube (1) having a closed wall (11) and an inner hollow space (12) defined by the closed wall (11), wherein the inner hollow space (12) is filled with a foam material to form an inner foam layer (2).

According to the above description, the tube (1) is shaped into a bicycle handlebar (A), or into at least one of an upper tube (B1), a lower tube (B2), a vertical tube (B3), an upper fork tube (B4), a lower fork tube (B5) and a handle tube head (B6) of a bicycle frame (B). According to the above description, a rod of a saddle (not shown in figures) can be disposed on the top of the vertical tube (B3), and the vertical tube (B3) has a first end and a second end for respectively connecting to the handle tube head (B6) by the upper tube (B1) and the lower tube (B2). Each of the upper fork tube (B4) and the lower fork tube (B5) has a first end and a second end. The first end of the upper fork tube (B4) connects to the first end of the lower fork tube (B5); the second end of the upper fork tube (B4) connects to the first end of the vertical tube (B3); and the second end of the lower fork tube (B5) connects to the second end of the vertical tube (B3). Additionally, the inner hollow space (12) is filled with the foam material to form the inner foam layer (2) after the tube (1) is shaped into the upper tube (B1), the lower tube (B2), the vertical tube (B3), the upper fork tube (B4), the lower fork tube (B5), the handle tube head (B6) of the bicycle frame (B), or the bicycle handlebar (A).

Preferably, the tube (1) is made of aluminum alloy, titanium alloy, magnesium alloy or carbon fiber. The foam material is selected from a group consisting of polystyrene, polypropylene, polyvinyl chloride, phenoplastics, and polyurethane.

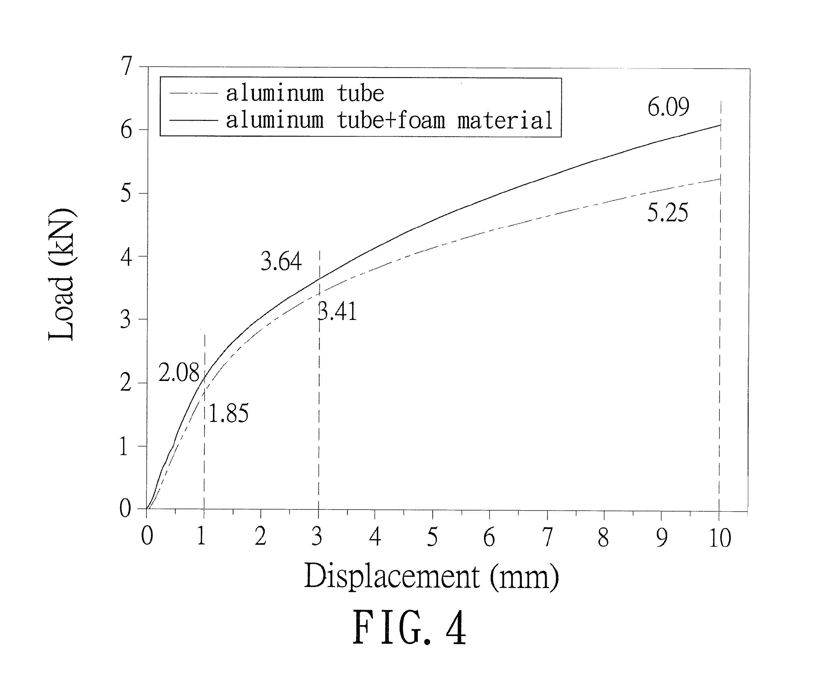

Furthermore, a three point bending test is conducted for measuring an aluminum tube and an aluminum tube filled with the foam material therein. A plot of the load (kN) versus the crack opening displacement (mm) is used to determine the load at which the crack starts growing. As shown in Fig. 4, the aluminum tube filled with the foam material shows increased strength and rigidity. Compared with the aluminum tube at the displacement of 1 mm and 10 mm, the aluminum tube filled with the foam material increases the strength and rigidity of 12.4% and 16%, respectively.

In addition, the shock-absorption ability of the aluminum tube filled with the foam material has been significantly improved. When the aluminum tube and the aluminum tube filled with the foam material bump the ground, the sound of the aluminum tube filled with the foam material is far less than that of the aluminum tube.

## Claims

1. A tube structure for a bike, comprising a tube (1) having a closed wall (11) and an inner hollow space (12) defined by the closed wall (11), wherein the inner hollow space (12) is filled with a foam material to form an inner foam layer (2).

2. The tube structure for a bike as claimed in claim 1, wherein the tube (1) is shaped into a bicycle handlebar (A) before the inner hollow space (12) is filled with the foam material to form the inner foam layer (2).

3. The tube structure for a bike as claimed in claim 2, wherein the tube (1) is made of aluminum alloy, titanium alloy, magnesium alloy or carbon fiber.

4. The tube structure for a bike as claimed in claim 3, wherein the foam material is selected from a group consisting of polystyrene, polypropylene, polyvinyl chloride, phenoplastics, and polyurethane.

5. The tube structure for a bike as claimed in claim 2, wherein the foam material is selected from a group consisting of polystyrene, polypropylene, polyvinyl chloride, phenoplastics, and polyurethane.

6. The tube structure for a bike as claimed in claim 1, wherein the tube (1) is shaped into at least one of an upper tube (B1), a lower tube (B2), a vertical tube (B3), an upper fork tube (B4), a lower fork tube (B5) and a handle tube head (B6) of a bicycle frame (B) before the inner hollow space (12) is filled with the foam material to form an inner foam layer (2).

7. The tube structure for a bike as claimed in claim 6, wherein the tube (1) is made of aluminum alloy, titanium alloy, magnesium alloy or carbon fiber.

8. The tube structure for a bike as claimed in claim 7, wherein the foam material is selected from a group consisting of polystyrene, polypropylene, polyvinyl chloride, phenoplastics, and polyurethane.

9. The tube structure for a bike as claimed in claim 6, wherein the foam material is selected from a group consisting of polystyrene, polypropylene, polyvinyl chloride, phenoplastics, and polyurethane.

10. The tube structure for a bike as claimed in claim 1, wherein the tube (1) is made of aluminum alloy, titanium alloy, magnesium alloy or carbon fiber.

11. The tube structure for a bike as claimed in claim 10, wherein the foam material is selected from a group consisting of polystyrene, polypropylene, polyvinyl chloride, phenoplastics, and polyurethane.

12. The tube structure for a bike as claimed in claim 1, wherein the foam material is selected from a group consisting of polystyrene, polypropylene, polyvinyl chloride, phenoplastics, and polyurethane.
